(19) Europäisches Patentamt
European Patent Office
Office européen des brevets

(11) Veröffentlichungsnummer: **0 240 711**
**A2**

# (12) EUROPÄISCHE PATENTANMELDUNG

(21) Anmeldenummer: **87102992.2**

(22) Anmeldetag: **03.03.87**

(51) Int. Cl.⁴: **C08K 5/43**, C08K 5/37, C08L 21/00

(30) Priorität: **01.04.86 DE 3610811**

(43) Veröffentlichungstag der Anmeldung: **14.10.87 Patentblatt 87/42**

(84) Benannte Vertragsstaaten: **AT BE CH DE ES FR GB IT LI LU NL SE**

(71) Anmelder: **Degussa Aktiengesellschaft**
**Weissfrauenstrasse 9**
**D-6000 Frankfurt am Main 1(DE)**

(72) Erfinder: **Schwarze, Werner, Dr.**
**Lerchesbergring 99**
**D-6000 Frankfurt 70(DE)**
Erfinder: **Wolff, Siegfried**
**Weiherstrasse 28**
**D-5303 Bornheim-Merten(DE)**
Erfinder: **Lambertz, Horst**
**Kreuzstrasse 37**
**D-5030 Hürth(DE)**

## (54) Verwendung von substituierten N-Trichlormethylthiodicarboximiden in Kombination mit N,N'-substituierten Bis-(2,4-diamino-s-triazin-6-yl)-Oligosulfiden in vulkanisierbaren Kautschukmischungen und derartige Kautschukmischungen.

(57) Verwendung von substituierten N-Trichlormethylthiodicarboximiden in Kombination mit N,N'-substituierten Bis-(2,4-diamino-s-triazin-6-yl)-Oligosulfiden in vulkanisierbaren Kautschukmischungen zur Verbesserung der Vulkanisationscharakteristik und derartige Kautschukmischungen.

EP 0 240 711 A2

**Verwendung von substituierten N-Trichlormethylthiodicarboximiden in Kombination mit N,N'-substituierten Bis-(2,4-diamino-s-triazin-6-yl) Oligosulfiden in vulkanisierbaren Kautschukmischungen und derartige Kautschukmischungen**

Die Erfindung betrifft die Verwendung von substituierten N-Trichlormethylthiodicarboximidenin Kombination mit N,N'-substituierten Bis-(2,4-diamino-s-triazin-6-yl)-Oligosulfiden in vulkanisierbaren Kautschukmischungen als Vulkanisationsverzögerer mit einem die Vernetzungsdichte erhöhendem Effekt und derartige Kautschukmischungen. Für die Vernetzung von Elastomeren mit Schwefel, dessen Vulkanisationscharakteristik selbst völlig unzureichend ist, steht eine Reihe von Vulkanisationsbeschleunigern zur Verfügung, die - bereits in geringer Menge zugesetzt - sowohl die auf chemischem Wege zu erreichende Vernetzungsdichte kräftig erhöhen als auch die Kinetik der Vernetzung so stark verbessern, daß der Vulkanisationsprozeß auch im Produktionsmaßstab rationell durchgeführt werden kann.

Obwohl die Vernetzung von Kautschukmischungen auch ohne freien Schwefel durchführbar ist, zum Beispiel mit Hilfe von Peroxiden oder Thiuramen, bezieht sich die Erfindung auf die beschleunigte Schwefelvulkanisation und die Vernetzung mit N,N'-substituierten Bis-(2,4-diamino-s-triazin-6-yl)-oligosulfden gemäß Formel (II) mit $n=4$ ohne freien Schwefel.
Dabei steht $n=4$ sowohl für Tetrasulfide als auch für Gemische von Verbindungen gemäß Formel II, bei denen $S_n$ einer mittleren statistischen Kettenlänge mit $n=4$ entspricht.

Mercaptane, Disulfide und Sulfenamide auf Benzthiazolbasis sind die wichtigsten Beschleuniger der Schwefelvulkanisation. In der Wirkungsweise ähnlich sind entsprechende Verbindungen auf Triazinbasis beschrieben in DE-PS 16 69 954 und DE-PS 12 98 706. In die gleiche Kategorie gehören auch die N,N'-substituierten Bis-(2,4-diamino-s-triazin-6-yl)-oligosulfide ($n=4$) gemäß Formel II, beschrieben in Patentanmeldung P die im Gegensatz zu den vorgenannten Beschleunigern auch ohne den Zusatz von freiem Schwefel vernetzen unter Aufbau einer -S-, -S-S-, -S-$S_x$-S-Vernetzungsstruktur.

Der Vernetzungsvorgang bei der beschleunigten Schwefelvulkanisation läßt sich in der Regel in 3 Phasen zerlegen, nämlich in die Inkubationszeit der Vernetzungsreaktion, den Vernetzungsvorgang selbst, charakterisiert durch die Geschwindigkeitskonstante und die Vernetzungsausbeute, und die Überheizungsperiode. Die vorgenannten Beschleuniger unterscheiden sich in ihrem Verhalten in der Regel in allen 3 Phasen.

Aus Gründen der Verarbeitungssicherheit von Kautschukmischungen, besonders wenn die Verarbeitungstemperatur zur Erhöhung der Produktivität angehoben werden muß, setzt man zur Verlängerung der Inkubationszeit der Vulkanisationsreaktion sogenannte Verzögerer oder "pre vulcanization inhibitors" zu. In der Praxis haben sich für die Verzögerung der Schwefelvulkanisation mit Sulfenamiden vorzugsweise Santoguard ® PVI (N-Cyclohexylthio-phthalimid; C.D. Trivette et al., Rubber Chem. Technol. 50, 570 (1977), Monsanto, US-PS 3.427.319, 3.546.185, 3.752.824, 3.855.262) und für Benzthiazolyldisulfid, vorzugsweise das Vulkalent ® E (Bayer AG, N-Phenyl-N-(trichlormethylsulfenyl)-benzolsulfonamid, DE-OS 1.957.484) als wirksame Mittel erwiesen.

Aufgabe der Erfindung ist die Verbesserung der Vulkanisationscharakteristik von vulkanisierbaren Kautschukmischungen.

Gegenstand der Erfindung ist die Verwendung von Verbindungen der allgemeinen Formel

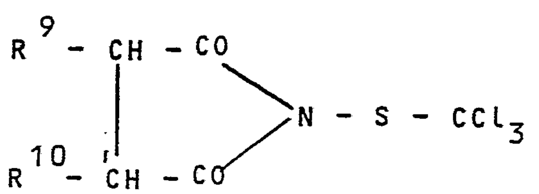 , (I)

in der bedeuten

$R^9$:H

$R^{10}$:H, $C_1$-$C_{16}$-Alkyl, Undecenyl, oder $R^9$ und $R^{10}$ bilden zusammen mit den in 3-und 4-Stellung stehenden Kohlenstoffatomen des Dicarboximids einen Sechsring, gesättigt oder ein-oder dreifach ungesättigt, der ein- bis 2-fach durch eine Methylgruppe substituiert sein kann, insbesondere Tetrahydrophthalimide des Typs

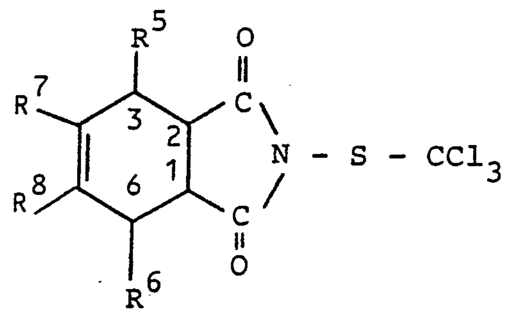

(Ia)

mit $R^7$, $R^8$ = H, Methyl,

$R^5$ und $R^6$ eine endo-$CH_2$-Brücke oder eine endo-O-Brücke,

in vulkanisierbaren Kautschuken in Kombination mit oligosulfidischen Verbindungen gemäß der Formel

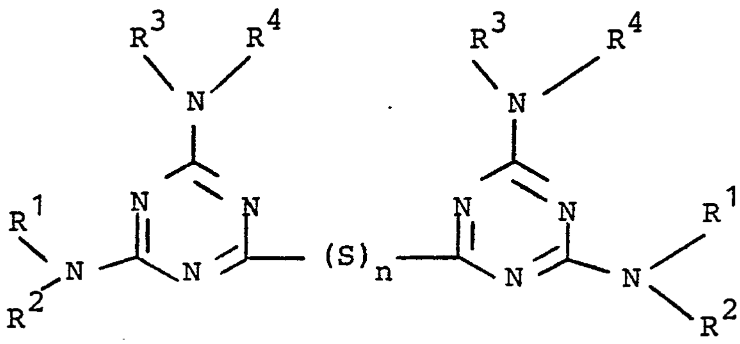

II

, in welcher bedeuten

$R^1$, $R^2$ = 'H, $R^2$ = Benzyl

$R^2$,$R^3$,$R^4$ = $C_1$-$C_8$-Alkyl, bevorzugt $C_1$-$C_4$-Alkyl, verzweigt oder unverzweigt, Allyl, $C_3$-$C_8$ Cycloalkyl, letzteres unsubstituiert oder mit 1-3 Methylgruppen substituiert, 2-Hydroxiethyl, 3-Hydroxipropyl, 2-hydroxypropyl oder .

$R^3$ und $R^4$ (zusammen): $C_4$-$C_6$-Alkylen,-$(CH_2$-$CHX)_2Y$ mit X = $CH_3$, H; Y = 0,5

n = 2 oder 4,

oder ein Gemisch von Verbindungen gemäß Formel (II), bei denen $S_n$ einer mittleren statistischen Kettenlänge mit n = 4 entspricht.

Das Verfahren zur Herstellung der reinen Tetrasulfide mit einer linearen $S_4$-Kette zwischen den beiden substituierten Triazinresten ist dadurch gekennzeichnet, daß man eine wässrige, alkalische Lösung der entsprechenden N,N'-substituierten 2,4-Diamino-6-mercaptotriazine in einem Zweiphasensystem mit einer $S_2Cl_2$-Lösung in einem inerten organischen Lösungsmittel, in welchem das Reaktionsprodukt nicht oder sehr wenig löslich ist, bei Temperaturen zwischen -5°C - <+20°C, vorzugsweise von +10°C, umsetzt. Vorteilhaft stellt man eine alkalische wässrige Lösung des Mercaptotriazins her, die mindestens die zur Umsetzung notwendige stöchiometrische Menge an Alkalihydroxid, bevorzugt einen Überschuß von 1 - 20 Mol%, bezogen auf das eingesetzte Mercaptotriazin, enthält.

Diese Lösung wird mit einem Lösungsmittel versetzt, in welchem das Endprodukt der Reaktion nicht oder wenig löslich ist, bevorzugt mit $C_5$-$C_{10}$-Alkanen oder $C_5$-$C_8$-Cycloalkanen, gegebenenfalls substituiert mit 1 bis 3 Methylgruppen, und deren Gemische. Diese Mischung wird stark gerührt und abgekühlt, bevorzugt auf +10°C. Nun läßt man in diese Mischung unter guter Kühlung eine Lösung von $S_2Cl_2$ in dem verwendeten Lösungsmittel zutropfen. $S_2Cl_2$ wird mindestens im Verhältnis 2 Mol Mercaptotriazin : 1 Mol $S_2Cl_2$ verwendet, doch kann dieses Verhältnis je nach Alkaliüberschuß auch 2 : 1,1 - 1,2 betragen.

Unter den gegebenen Bedingungen wirkt $S_2Cl_2$ ausschließlich kondensierend.

Das entstandene Produkt wird mit Hilfe allgemein bekannter Maßnahmen abgetrennt und vorteilhaft bei Temperaturen bis zu +50°C unter Vakuum (10 Torr) getrocknet.

Eingesetzt werden ebenso Gemische, bestehend aus oligosulfidischen Verbindungen der allgemeinen Formel

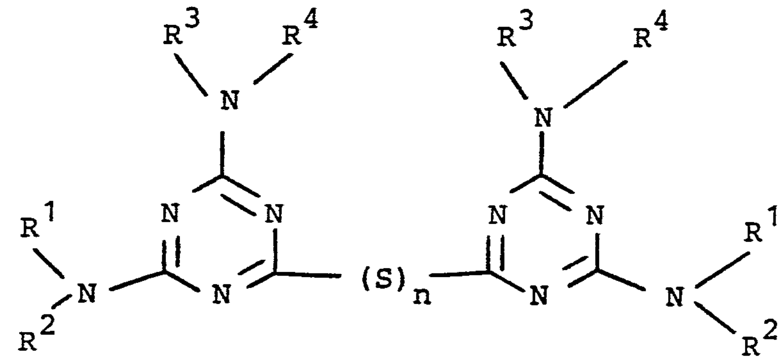

in der $R^1$, $R^2$, $R^3$ und $R^4$ die obengenannten Bedeutungen haben und $S_n$ einer mittleren statistischen Kettenlänge mit n = 4 entspricht.

Diese Gemische aus Oligosulfiden, im folgenden Text auch als Disproportioniate bezeichnet, da sie durch Disproportionierung von Tetrasulfiden gemäß Formel II entstehen, können auf mehreren Wegen dargestellt werden.

Dabei sind die Reaktionsbedingungen so zu steuern, daß kein freier Schwefel entsteht.

Ein Verfahren ist dadurch gekennzeichnet, daß man ein isoliertes Tetrasulfid gemäß Formel II über seinen Schmelzpunkt hinaus erhitzt, vorzugsweise um 20 - 50°C.

In einem weiteren Verfahren löst man die Tetrasulfide gemäß FormelII in einem inerten organischen Lösungsmittel und führt die Disproportionierungsreaktion im Temperaturbereich zwischen 20°C (Stehenlassen bei Zimmertemperatur) und Siedepunkt des eingesetzten Lösungsmittels durch.

Eine besonders elegante Methode besteht darin, daß man eine wässrige alkalische Lösung der entsprechenden N,N'-substituierten 2,4-Diamino-6-mercaptotriazine in einem Zweiphasensystem mit einer Lösung von $S_2Cl_2$ in einem inerten, das entstehende Tetrasulfid lösende organischen Lösungsmittel umsetzt. Das entstehende lineare Tetrasulfid wird dann in der Folge sofort in das erfindungsgemäße Gemisch disproportioniert.

Als Lösungsmittel sind geeignet insbesondere chlorierte Kohlenwasserstoffe zum Beispiel $CH_2Cl_2$ und $CHCl_3$, aber auch Ether, Ester, sowie aromatische Kohlen wasserstoffe und Ketone sind für die Disproportionierungsreaktion in Abwesenheit von Wasser geeignet. Ansonsten sind sie einsetzbar, wenn sie mit Wasser ein zweiphasiges Gemisch bilden. Die Reaktionsbedingungen zur Herstellung der Disproportionate sind ansonsten identisch mit denen zur Herstellung der reinen Tetrasulfide.

Bis zu welchem Grad die Disproportionierungsreaktion fortgeschritten ist, bleibt für die Eignung des entstehenden Gemisches ohne Belang. Es darf nur kein freier Schwefel bei der Disproportionierung entstehen.

Es zeigt sich, daß die erfindungsgemäß verwendeten substituierten N-Trichlormethylthiodicarboximide gemäß den Formeln (I, Ia) in Kombination mit den Triazinverbindungen gemäß Formel II nicht nur ausgezeichnete Vulkanisationsverzögerer sind, sondern gleichzeitig auch die Vulkanisationscharakteristik so verändern, daß alle auf die Vernetzungsdichte ansprechenden physikalischen Daten, wie das maximale Drehmoment (Rheometer) oder die Spannungswerte bei 300 % Dehnung, beträchtlich angehoben werden.

Bevorzugt eingesetzt werden N-Trichlormethylthio-phthalimid (VZ a) und 1,2,3,6-Tetrahydro-N-(trichlormethylthio)-phthalimid (VZ b).

Als weitere Beispiele für die erfindungsgemäß verwendbaren Verbindungen gemäß den Formeln (I, Ia) seien genannt:

N-Trichlormethylthio-succinimid (VZ c)
N-Trichlormethylthio-dodecylsuccinimid
N-Trichlormethylthio-7-oxabicyclo-(2.2.1)-hept-5-en-2.3-dicarboximid
N-Trichlormethylthio-5-norbornen-1,2-dicarboximid

Diese Substanzen sind bekannt, einige von ihnen werden großtechnisch hergestellt und als Fungizide in der Landwirtschaft verwendet (Captan ® und Folpet ®). Man stellt sie aus den entsprechenden Dicarboximiden und Perchlormethylmercaptan = Trichlorsulfenylchlorid in Gegenwart eines Säureakzeptors her (CHEVRON, US-PS 2.553.70, 2.553.771, 2.553.776; BAYER, US-PS 2.846.442; ZEFIROV und YUREF; C.A.

55.504). Beschrieben war in Kautschukmischungen bisher nur die Verwendung von N-Trichlormethylthiophthalimid in Kombination mit Sulfenamiden des Benzthiazols, zum Beispiel des Benzthiazolyl-cyclohexylsulfenamids oder des Benzthiazolyl-2-sulfenmorpholids (SU-PS 164.670, J.J. Eitington et al.) mit nur - schwacher verzögernder Wirkung.

Die N,N'-substituierten Bis-(2,4-diamino-s-triazin-6-yl)-disulfide gemäß Formel II werden in der DE-PS 16 69 954 beschrieben, zum Beispiel

Bis-(2-ethylamino-4-diethylamino-s-triazin-6-yl)-disulfid
Bis-(2-ethylamino-4-di-isopropylamino-s-triazin-6-yl)-disulfid
Bis-(2-n-propylamino-4-diethylamino-s-triazin-6-yl)-disulfid
Bis-(2-ethylamino-4-di-n-butylamino-s-triazin-6-yl)-disulfid

Als Beispiele für N,N'-substituierte Bis-(2,4-diamino-s-triazin-6-yl)-Tetrasulfide und deren Disproportionate seien genannt:

N Bis-(2-ethylamino-4-diethylamino-triazin-6-yl)-tetrasulfid
A Bis-(2-ethylamino-4-di-isopropylamino-s-triazin-6-yl)-tetrasulfid
B Bis-(2-n-butylamino-4-diethylamino-s-triazin-6-yl)-tetrasulfid
C 8is-(2-isopropylamino-4-di-isopropylamino-s-triazin-6-yl)-tetrasulfid
D Bis-(2-ethylamino-4-di-isobutylamino-s-triazin-6-yl)-tetrasulfid
E Bis-(2-ethylamino-4-di-n-propylamino-s-triazin-6-yl)-tetrasulfid
F Bis-(2-n-propylamino-4-diethylamino-s-triazin-o-yl)-tetrasulfid
G Bis-(2-n-propylamino-4-di-n-propylamino-s-triazin-6-yl)-tetrasulfid
H Bis-(2-n-butylamino-4-di-n-propylamino-s-triazin-6-yl)-tetrasulfid
I Bis-(2-ethylamino-4-di-n-butylamino-s-triazin-6-yl)-tetrasulfid
K Bis-(2-isopropylamino-4-di-isopropylamino-s-triazin-6-yl)-oligosulfid-Gemisch
L Bis-(2-cyclohexylamino-4-diethylamino-s-triazin-6-yl)-oligosulfid-Gemisch
M Bis-(2-ethylamino-4-diethylamino-s-triazin-6-yl)-oligosulfid-Gemisch
O Bis-(2-amino-4-diethylamino-s-triazin-6-yl)-oligosulfid-Gemisch

Die erfindungsgemäß als Vulkanisationsverzögerer mit Vernetzungsdichte-erhöhendem Effekt zu verwendenden substituierten N-trichlormethylthio-dicarboximide in Kombination mit N,N'-substituierten Bis-(2,4-diamino-s-triazin-6-yl)-Sulfiden gemäß Formel(II) eignen sich für die nach dem Stand der Technik bekannten Kautschukmischungen mit Naturkautschuk (NR), Isoprenkautschuke (IR), Butadienkautschuke (BR), Styrol-Butadienkautschuke (SBR), Isobutylen-isoprenkautschuke (IIR), Ethylen-Propylen-Terpolymere (EPDM), Nitrilkautschuke (NBR), halogenhaltige Kautschuke und auch epoxidierte Naturkautschuke (ENR) sowie deren Verschnitte.

Erfindungsgemäß werden Verbindungen gemäß den Formeln (I,Ia) in einer Menge von 0,1-5 Teilen und die N,N'-substituierten Bis-(2,4-diamino-s-triazin-6-yl)-Sulfide ($n = 4$) gemäß Formel II werden in einer Menge von 0.1 - 10 Teilen bezogen auf 100 Teile Kautschuk eingesetzt. Bevorzugt wird das molare Verhältnis von Triazin-Vernetzer zu Verzögerer von 1 : 0.3-1.5, vorzugsweise 1 : 0,3 - 1,2. In diesem Fall enthält die Mischung keinen freien Schwefel.

Bei der beschleunigten Schwefelvulkanisation setzt man die substituierten N-Trichlormethylthiocarboximide gemäß den Formeln (I, Ia) in Mengen von 0.1 - 5 Teilen,bevorzugt 0.1 - 2 Teile pro 100 Teile Kautschuk zu bei Schwefelmengen von 0.1 - 10 Teilen, vorzugsweise 0.1 - 8 Teile pro 100 Teile Kautschuk. Bevorzugt werden molare Verhältnisse von Beschleuniger, Verzögerer, Schwefel von 1 : 0,3 - 1.5 : 0.5 - 1.5, vorzugsweise 1 : 0,3-1.2 : 0.5 - 1.5. Oligosulfide gemäß Formel II werden dann in Mengen von 0,1 - 10 Teilen verwendet. Zur Erzielung einer weiteren Variationsbreite der Vulkanisationskinetik kann es sich als zweckmäßig erweisen, die Triazinbeschleuniger gemäß Formel II in Form von Gemischen zweier oder mehrerer Individuen einzusetzen, wobei zur Einhaltung der o.a. Anwendungsmengen, insbesondere der bevorzugten molaren Verhältnisse, die Substitution auf molarer Basis vorzunehmen ist.

Gleichermaßen ist die Substitution bei der Verwendung der Triazinverbindungen gemäß Formel (II) vorzunehmen, wenn ohne Schwefel gearbeitet wird.

Ebenfalls aus kinetischen Gründen kann es sich als zweckmäßig erweisen, die N,N'-substituierten Bis-(2,4-diaminos-triazin-6-yl)-oligosulfide gemäß Formel II in Gemisch mit konventionellen Beschleunigern der Benzthiazolreihe und/oder Thiurame einzusetzen, zum Beispiel N-Cyclohexylbenzthiazolsulfenamid, 2-Mercaptobenzthiazol, Benzthiazolyldisulfid, bzw. deren Zinksalze und Tetramethylthiuramdisulfid (s.a. J.van Alphen, Rubber Chemicals (1977), S. 1-46).

Mit diesen Dosierungsrichtlinien lassen sich wichtige Vulkanisationsprobleme lösen, ohne daß es dabei zu einem Vulkanisateigenschaftsverlust kommt.

N,N'-substituierte Bis-(2,4-diamino-s-triazin-6-yl)-oligosulfide gemäß Formel II können vorteilhaft zusammen mit Organosilanen, zum Beispiel

(III)$[(R\text{-}O)_3\ Si - (CH_2)_n]_2\ \text{-}S_x$ oder $(RO)_3\text{-}Si(CH_2)_n\text{-}SH$ (IV)
mit n = 2;3, x = 2-6, R = $C_1$-$C_6$-Alkyl,Cyclohexyl
oder

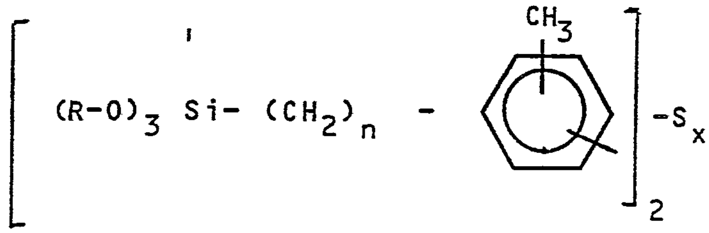

mit x = 2-6, bevorzugt 3,

vorzugsweise Bis-(3-triäthoxisilylpropyl)-Tetrasulfid (Si 69, Degussa AG) eingesetzt werden, und zwar bei der schwefelfreien Si 69-Vernetzung (DE-PS 25 36 674), bei der Schwefelvulkanisation mit Si 69 (DE-PS 22 55 577) und ebenso bei der Herstellung reversionsstabiler Vulkanisate durch Aufbau von equilibrium cure systems gemäß DE-PS 28 48 559. In allen genannten Fällen fungieren substituierte N-Trichlormethylthiodicarboximide gemäß Formel (I, Ia) als geeignete Vulkanisationsverzögerer mit Vernetzungsdichteerhöhendem Effekt.

Die vulkanisationsverzögernde Wirkung substituierter N-Trichlormethylthiodicarboximide gemäß Formel (I, Ia) tritt auch ein, wenn N,N'-substituierte Bis-(2,4-diamino-s-triazin-6-yl)-oligosulfide gemäß Formel(II)-allein oder im Gemisch zusammen mit konventionellen Beschleunigern und/oder mit üblichen Schwefelspendern wie zum Beispiel Sulfasan ® R (Morpholindisulfid) eingesetzt werden.

Die Verwendung von substituierten N-trichlormethylthiodicarboximiden als Verzögerer mit Vernetzungsdichte-erhöhendem Effekt in Kombination mit N,N'-substituierten Bis-(2,4-diamino-s-triazin-6-yl)-oligosulfiden gemäß Formel (II) erfolgt in Kautschukmischungen, die als weitere übliche Mischungskomponenten enthalten können:

-Verstärkungssysteme, d.h. Furnace-Ruße, Channel-Ruße, Flammruße, Thermalruße, Acetylenruße, Lichtbogenruße, CK-Ruße usw. sowie synthetische Füllstoffe wie Kieselsäuren, Silikate, Aluminiumoxidhydrate, Calciumcarbonate und natürliche Füllstoffe wie Clays, Kieselkreiden, Kreiden, Talke usw. sowie silanmodifizierte Füllstoffe und deren Verschnitte in Mengen von 5 - 300 Teilen,
je 100 Teile Kautschuk,

-Zinkoxid und Stearinsäure als Promotoren der Vulkanisation in Mengen von 0.5 - 10 Teilen pro 100 Teile Kautschuk,

-üblicherweise verwendete Alterungs-, Ozon-, Ermüdungsschutzmittel wie zum Beispiel IPPD, TMQ usw. und auch Wachse als Lichtschutzmittel und deren Verschnitte,

-beliebige Weichmacher wie zum Beispiel aromatische, naphthenische, paraffinische, synthetische Weichmacher und deren Verschnitte,

-ggfs. in der Kautschukindustrie dem Stand der Technik entsprechend verwendete Organosilane wie zum Beispiel $\gamma$-Chlorpropyltrialkoxisilane, Vinyltrialkoxysilane,$\gamma$-Mercaptoalkyltrialkoxisilane und Aminoalkyl trialkoxisilane, sowie deren Verschnitte in einer Menge von 0.1 - 25, bevorzugt 1 - 10 Teile je 100 Teile silanolgruppentragender Füllstoffe wie Kieselsäuren, Silikate, Clays usw.

-ggfs. Farbstoffe und Verarbeitungshilfsmittel in der üblichen Dosierung.

Herstellung und Vulkanisation der Kautschukmischungen erfolgt nach den bekannten Verfahren und unter den üblichen Bedingungen.

Der Anwendungsbereich der N-(trichlormethylthio)-dicarboximide in Kombination mit N,N'-substituierten Bis-(2,4-diamino-s-triazin-6-yl)-Sulfiden gemäß den Formeln (I), (Ia) und (II) erstreckt sich auf Kautschukmischungen wie sie üblicherweise im Reifenbau verwendet werden, auf technische Artikel, wie zum Beispiel Mischungen für Fördergurte, Keilriemen, Formartikel, Schläuche mit und ohne Einlagen, Walzengummierungen, Auskleidungen, Spritzprofile, Freihandartikel, Folien, Schuhsohlen und Oberteile, Kabel, Vollgummireifen und deren Vulkanisate.

Herstellung und Vulkanisation der Kautschukmischungen erfolgt nach den bekannten Verfahren und unter den üblichen Bedingungen.

Beispiel 1:

Man löst 454 g 2-Ethylamino-4-diethylamino-6-mercaptotriazin in Natronlauge, die man aus 84 g NaOH + 1,5 Liter $H_2O$ hergestellt hat.

Die Lösung gibt man in einen 4 Liter 3 Tubenkolben, dann gibt man 1,5 Liter Leichtbenzin (Kp 80 - 110°C) hinzu und kühlt die Mischung unter starkem Rühren auf 0°C ab.

Nun läßt man innerhalb von 20 min. eine Lösung von 137 g $S_2Cl_2$ in100 ml Benzin einlaufen, wobei man darauf achtet, daß die Temperatur +5°C nicht überschretet.

Das Tetrasulfid fällt sofort aus. Am Ende der Reaktion wird 5 min. nachgerührt, anschließend abgenutscht und gewaschen.

Das schneeweiße feine Pulver wird im Vakuum/12 Torr bei 40 - 45°C getrocknet.

Menge: 499,5 g, entsprechend 97,1 % der Theorie,
F. 149 - 150°C

Analyse: Bis-(2-ethylamino-4-diethylamino-s-triazin-6-yl)-Tetrasulfid,
Molgew. 516, $C_{18}H_{32}N_{10}S_4$

ber. C 41,9 H 6,2 N 27,1 S 24,8
gef. C 41,8 H 6,5 N 26,8 S 24,8

TLC-und HPLC-Analyse zeigen, daß das Produkt 97,1 % lineares Tetrasulfid enthält.

Beispiel 2:

Man löst 56,6 g 2-Ethylamino-4-di-n-butylamino-6-mercaptotriazin in einer Lösung von 8,8 NaOH in 250 ml Wasser. Dazu gibt man 250 ml Benzin. Die Mischung wird nach gutem Rühren auf +5°C abgekühlt. Nun läßt man eine Lösung von 13,5 g $S_2Cl_2$ in 30 ml Benzin zulaufen. Es bildet sich sofort ein weißer Niederschlag. Am Ende der Reaktion wird nach Beispiel 1 aufgearbeitet.
Menge: 56 g, entsprechend 89,2 % der Theorie.

Analyse: $C_{26}H_{48}N_{10}S_4$ (Molgew. 628)
ber. C 49,68 H 7,64 N 22,29 S 20,38
gef. C 49,59 H 7,59 N 22,18 S 20,40

HPLC-Analyse: Reinheitsgrad >96 %.

Beispiel 3:

107,6 g 2-i-Propylamino-4-diisopropylamino-6-mercaptotriazin löst man in Natronlauge, die man aus 17,6 g NaOH in 600 ml $H_2O$ herstellt. Dazu gibt man 600 ml Methylenchlorid.

Bei 0-5°C läßt man eine Lösung von 27 g $S_2Cl_2$ in 50 ml $CH_2Cl_2$ zulaufen. Am Ende der Reaktion trennt man in einem Scheidetrichter die organische Phase ab, trocknet und dampft im Vakuum ein. Man erhält ein amorphes Pulver; Erweichungspunkt: 90°C.
Ausbeute: 112,5 g, entsprechend 94 % der Theorie.

Analyse: $C_{24}H_{44}N_{10}S_4$ (Molgew. 600)
ber. C 48 H 7,33 N 23,3 S 21,3
gef. C 48,2 H 7,36 N 23,01 S 20,95

Beispiel 4:

Man löst 45,4 g 2-Ethylamino-4--diethylamino-6-mercaptotriazin in Natronlauge, hergestellt aus 8,8 g NaOH und 200 ml Wasser. Dazu gibt man 200 ml Methylenchlorid. Die Mischung wird turbiniert und auf 0°C abgekühlt. Man löst nun 14 g $S_2Cl_2$ in 50 ml $CH_2Cl_2$ und läßt diese Lösung in die Mercaptidlösung einlaufen.

Das Reaktionsprodukt löst sich in $CH_2Cl_2$. Am Ende der Reaktion trennt man die Phasen und arbeitet die $CH_2Cl_2$-Lösung auf. Man erhält so ein amorphes Pulver mit einem Erweichungspunkt von ca. 110°C.
Menge: 46,7 g, entsprechend 90,5 % der Theorie.

Analyse: $C_{18}H_{32}N_{10}S_4$ (Molgew. 516)
ber N 27,1 S 24,8
gef. N 26,8 S 24,4

Laut TLC-Analyse enthält man ein Gemisch aus 4 Oligosulfide,aber keinen freien Schwefel

Beispiel 5:

Man gibt 50 g Bis-(2-ethylamino-4-diethylamino-s-triazin-6-yl)-Tetrasulfid mit einem Reinheitsgrad von 97,1 % in einen Rundkolben und erwärmt im Ölbad 1 Stunde auf 160°C. Kalt erstarrt die Schmelze amorph. Nach TLC-Analyse enthält das Produkt neben ca. 50 % Ausgangsprodukt 3 weitere Oligosulfide.

Beispiel 6:

70,25 g 2-Cyclohexylamino-4-diethylamino-6-mercaptotriazin löst man in 11 g NaOH und 250 ml Wasser. Dazu gibt man 250 ml Chloroform. Unter starkem Rühren läßt man eine Lösung von 16,8 g $S_2Cl_2$ in 30 ml $CHCl_3$ zulaufen. Am Ende der Reaktion trennt man die Phase und arbeitet die Chloroformschicht auf. Man erhält 71,9 g eines weißen amorphen Pulvers, entsprechend 92 % der Theorie.

Analyse: $C_{26}H_{44}N_{10}S_4$ (Molgew. 624)
ber C 50 H 7,05 N 22,4 S 20,51
gef. C 49,1 H 6,90 N 21,8 S 20

Laut TLC-Analyse setzt sich das Produkt aus ca. 30% linearem $S_4$-Produkt und 70 % Oligosulfiden zusammen, enthält aber keinen freien Schwefel.

Prüfungsnormen

Die physikalischen Prüfungen wurden bei Raumtemperatur nach folgenden Normvorschriften ausgeführt:

| | | gemessen in |
|---|---|---|
| Spannungswert 300% | DIN 53504 | MPa |
| Inkubationszeit $t_i$ | DIN 53 529 | min |
| Scorchzeit | ASTM D 2084 | min |
| Shore-A-Härte | DIN 53505 | Grad |
| $D_{max} - D_{min}$ | DIN 53529 | Nm |

In den Anwendungs-Beispielen werden folgende Namen und Abkürzungen benutzt, deren Bedeutung im folgenden angegeben wird.

| | |
|---|---|
| RSS: | Ribbed Smoked Sheet (Naturkautschuk) |
| CORAX® N 220: | Ruß, Oberfläche (BET) 120 $m^2/g$ (Degussa) |
| Naftolen® ZD: | Weichmacher aus Kohlenwasserstoffen |
| Vulkanox ® 4010 NA: | N-Isopropyl-N'-phenyl-p-phenylendiamin |
| Vulkanox® HS: | Poly-2,2,4-trimethyl-1,2-dihydrochinolin |
| Mesamoll®: | Alkylsulfonsäureester von Phenol und Kresol |
| Protektor® G 35: | Ozonschutzwachs |
| Vulkacit® MOZ: | Benzthiazol-2-morpholinosulfenamid |
| Vulkalent® E: | N-Phenyl-N-(trichlormethylsulfenyl)-benzolsulfonamid |
| PVI: | N-Cyclohexylthiophthalimid |
| Ultrasil® VN 3: | gefällte Kieselsäure (Degussa) |
| Gran. | Granulat |
| V 143: | Bis-(2-Ethylamino-4-diethylamino-s-triazin-6-yl)-disulfid |
| V 225: | Bis-(2-Isopropylamino-4-diisopropylamino-s-triazin-6-yl)-disulfid |
| Sulfasan® R | Morpholindisulfid |

<u>Beispiel 7:</u> Wirkung von VZ-Substanzen in Kombination mit N,N'-substituierten Bis-(2,4-diamino-s-triazin-6-yl)-oligosulfiden als Beschleuniger in N 220-gefüllten NR-Mischungen

| | 1 | 2 | 3 | 4 | 5 | 6 | 7 |
|---|---|---|---|---|---|---|---|
| RSS 1, ML (1+4=70-80 | 100 | 100 | 100 | 100 | 100 | 100 | 100 |
| CORAX N 220 | 50 | 50 | 50 | 50 | 50 | 50 | 50 |
| ZnO RS | 5 | 5 | 5 | 5 | 5 | 5 | 5 |
| Stearinsäure | 2 | 2 | 2 | 2 | 2 | 2 | 2 |
| Naftolen ZD | 3 | 3 | 3 | 3 | 3 | 3 | 3 |
| Protektor G 35 | 1 | 1 | 1 | 1 | 1 | 1 | 1 |
| Vulkanox HS | 1,5 | 1,5 | 1,5 | 1,5 | 1,5 | 1,5 | 1,5 |
| Vulkanox 4010 NA | 2,5 | 2,5 | 2,5 | 2,5 | 2,5 | 2,5 | 2,5 |
| Vulkacit MOZ | 1,43 | - | - | - | - | - | - |
| V 143 | - | 1,29 | 1,29 | 1,29 | - | - | - |
| D | - | - | - | - | 1,5 | 1,5 | 1,5 |
| VZ a | - | - | 0,4 | - | - | 0,8 | - |
| VZ b | - | - | - | 0,4 | - | - | 0,8 |
| Schwefel | 1,5 | 1,5 | 1,5 | 1,5 | 1,5 | 1,5 | 1,5 |
| $D_{max} - D_{min}$ (170°C), Nm | 8,56 | 8,04 | 9,58 | 9,62 | 7,28 | 8,45 | 8,53 |
| $t_I$ (170°C), min. | 4,5 | 3,7 | 4,8 | 4,9 | 2,9 | 4,3 | 4,2 |
| Vernetzungsgeschwindigkeit (t 90% - t 10%), min | 2,5 | 2,3 | 2,5 | 2,5 | 3,4 | 3,1 | 3,1 |
| $t_I$ (130°C), min | 22,5 | 15,0 | 24,5 | 24,0 | 9,5 | 22,0 | 21,5 |
| Vulkanisatdaten bei 170°C | | | | | | | |
| Spannungswert 300%, | 10,2 | 10,3 | 11,5 | 11,6 | 10,6 | 11,3 | 11,3 |

Beispiel 7 demonstriert, daß der Zusatz der N-Trichlormethylthiophthalimide für di- und tetrasulfidische Triazine eine Scorchverlängerung ergibt (Mischungen 2-7), die die Scorchzeit auf das Niveau von Sulfenamidbeschleunigung (Mischung 1) anhebt. In rußgefülltem NR ist darüberhinaus keine Veränderung der Vernetzungsgeschwindigkeit festzustellen, wohl aber eine Verbesserung der 300%-Spannungswerte.

Beispiel 8: Vergleich von VZ-Substanzen zu Vulkalent E in N 220-gefülltem NR in Kombination mit N,N'-substituierten Bis-(2,4-diamino-s-triazin-6-yl)-oligosulfiden als Beschleunigern

| | 8 | 9 | 10 | 11 | 12 | 13 |
|---|---|---|---|---|---|---|
| RSS 1, ML (1+4) = 70-80 | 100 | 100 | 100 | 100 | 100 | 100 |
| CORAX N 220 | 50 | 50 | 50 | 50 | 50 | 50 |
| ZnO RS | 5 | 5 | 5 | 5 | 5 | 5 |
| Stearinsäure | 2 | 2 | 2 | 2 | 2 | 2 |
| Naftolen ZD | 3 | 3 | 3 | 3 | 3 | 3 |
| Protector G 35 | 1 | 1 | 1 | 1 | 1 | 1 |
| Vulkanox 4010 NA | 2,5 | 2,5 | 2,5 | 2,5 | 2,5 | 2,5 |
| Vulkanox HS | 1,5 | 1,5 | 1,5 | 1,5 | 1,5 | 1,5 |
| Vulkacit MOZ | 1,43 | - | - | - | - | - |
| N | - | 1,5 | 1,5 | 1,5 | 1,5 | 1,5 |
| Vulkalent E | - | - | 0,8 | - | - | - |
| VZ a | - | - | - | 0,8 | - | - |
| VZ b | - | - | - | - | 0,8 | - |
| VZ c | - | - | - | - | - | 0,8 |
| Schwefel | 1,5 | 0,8 | 0,8 | 0,8 | 0,8 | 0,8 |
| $t_I$ (170°C), min | 4,5 | 2,9 | 3,8 | 4,3 | 4,2 | 4,3 |
| $t_I$ (130°C), min | 22,5 | 9,5 | 14,0 | 22,0 | 21,5 | 20,5 |
| Vulkanisatdaten bei 170°C | | | | | | |
| Spannungswert 300% | 10,2 | 10,6 | 10,7 | 11,3 | 11,3 | 11,2 |

Der Vergleich von Vulkalent E (Mischung 10) zu VZ-Substanzen (Mischungen 11-13) zeigt, daß die VZ-Substanzen zu längerer Inkubationszeit und höherem Spannungswert bei 300% Dehnung führen.

Beispiel 9: Temperaturabhängigkeit der Wirkungsweise von VZ-Substanzen bei Beschleunigung der Vulkanisation mit Bis-(2-ethylamino-4-diethylamino-s-triazin-6-yl)-disulfid in N 220-gefülltem NR

| | 14 | 15 | 16 |
|---|---|---|---|
| RSS 1, ML (1+4)=70-80 | 100 | 100 | 100 |
| CORAX N 220 | 50 | 50 | 50 |
| ZnO RS | 5 | 5 | 5 |
| Stearinsäure | 2 | 2 | 2 |
| Naftolen ZD | 3 | 3 | 3 |
| Vulkanox 4010 NA | 2,5 | 2,5 | 2,5 |
| Vulkanox HS | 1,5 | 1,5 | 1,5 |
| Protector G 35 | 1 | 1 | 1 |
| V 143 | 1,29 | 1,29 | 1,29 |
| VZ a | - | 0,8 | - |
| VZ b | - | - | 0,8 |
| Schwefel | 1,5 | 1,5 | 1,5 |
| $t_I$, min: | | | |
| 145°C | 9,2 | 17,0 | 17,5 |
| 160°C | 5,2 | 8,2 | 8,2 |
| 170°C | 4,0 | 5,2 | 5,7 |
| 180°C | 2,8 | 4,0 | 4,0 |
| Vulkanisationsgeschw., min: (t 90% - t 10%) | | | |
| 145°C | 15,9 | 18,9 | 18,2 |
| 160°C | 4,1 | 5,4 | 5,2 |
| 170°C | 2,0 | 3,0 | 2,6 |
| 180°C | 1,3 | 1,6 | 1,6 |
| Vulkanisatdaten: | | | |
| Spannungswert 300%, MPa | | | |
| 145°C | 10,6 | 12,3 | 13,1 |
| 170°C | 9,5 | 12,0 | 12,5 |
| Shore-A-Härte: | | | |
| 145°C | 65 | 69 | 69 |
| 170°C | 63 | 68 | 68 |

Der Zusatz der VZ-Substanzen bewirkt bei Verarbeitungstemperaturen der Mischungen (< 145°C) eine beträchtliche Verlängerung der Inkubationszeit ohne wesentliche Verringerung der Vulkanisationszeit bei höheren Temperaturen und in jedem Fall eine effektive Steigerung des 300%-Spannungswertes.

**Beispiel 10:** Wirkung von VZ-Substanzen auf die Beschleunigung mit Bis-(2-ethylamino-4-diethylamino-s-triazin-6-yl)-tetrasulfid (N) in Ruß/Kieselsäure-gefülltem NR

| | 17 | 18 | 19 |
|---|---|---|---|
| RSS 1, ML (1+4) = 70-80 | 100 | 100 | 100 |
| CORAX N 220 | 25 | 25 | 25 |
| Ultrasil VN 3 Gran. | 25 | 25 | 25 |
| ZnO RS | 5 | 5 | 5 |
| Stearinsäure | 2 | 2 | 2 |
| Naftolen ZD | 3 | 3 | 3 |
| Protector G 35 | 1 | 1 | 1 |
| Vulkanox 4010 NA | 2,5 | 2,5 | 2,5 |
| Vulkanox HS | 1,5 | 1,5 | 1,5 |
| Vulkacit MOZ | 1,43 | - | - |
| N | - | 3 | 3 |
| VZ a | - | - | 0,8 |
| Schwefel | 1,5 | 0,8 | 0,8 |
| $t_I$ (170°C), min. | 4,6 | 3,8 | 4,7 |
| $t_I$ (130°C), min. | 33,3 | 16,8 | 32,0 |
| Vulkanisatdaten (170°C): | | | |
| Spannungswert 300% | 3,6 | 5,9 | 8,6 |

In N 220/ Kieselsäure-gefüllten NR-Mischungen zeigt der Zusatz von VZ a (Mischung 19) eine Inkubationszeitverlängerung auf Referenzniveau (Mischung 17) und gleichzeitig eine 300%-Spannungswertsteigerung gegen Mischung 17 u. 18.

**Beispiel 11**: Wirkung von VZ a in Ruß-gefülltem NR, beschleunigt mit einem V 143/MOZ-Verschnitt

| | 20 | 21 | 22 |
|---|---|---|---|
| RSS 1, ML (1+4) = 70-80 | 100 | 100 | 100 |
| CORAX N 220 | 50 | 50 | 50 |
| ZnO RS | 5 | 5 | 5 |
| Stearinsäure | 2 | 2 | 2 |
| Naftolen ZD | 3 | 3 | 3 |
| Protector G 35 | 1 | 1 | 1 |
| Vulkanox 4010 NA | 2,5 | 2,5 | 2,5 |
| Vulkanox HS | 1,5 | 1,5 | 1,5 |
| Vulkacit MOZ | 1,43 | 0,72 | 0,72 |
| V 143 | - | 0,75 | 0,75 |
| VZ a | - | - | 0,4 |
| Schwefel | 1,5 | 1,5 | 1,5 |
| $D_{max} - D_{min}$, (170°C) Nm | 8,56 | 8,24 | 8,87 |
| $t_I$ (170°C), min. | 4,5 | 4,1 | 4,7 |
| $t_I$ (130°C), min. | 22,5 | 15,0 | 19,3 |

Bei gemeinsamer Verwendung von N,N'-substituierten Bis-(2,4-diamino-s-triazin-6-yl)-sulfiden mit handelsüblichen Sulfenamidbeschleunigern (Mischung 21) wird durch den Zusatz von VZ a (Mischung 22) ebenfalls die Inkubationszeit verlängert.

**Beispiel 12:** Wirkung von VZ b in Kombination mit N,N'-substituiertem Bis-(2,4-diamino-s-triazin-6-yl)-oligosulfid/Si 69 in Ruß/Kieselsäure-gefüllte NR-Mischungen

| | 23 | 24 | 25 |
|---|---|---|---|
| RSS 1, ML (1+4) = 70-80 | 100 | 100 | 100 |
| CORAX N 220 | 25 | 25 | 25 |
| Ultrasil VN 3 Gran. | 25 | 25 | 25 |
| Si 69 | 3,75 | 3,75 | 3,75 |
| ZnO RS | 5 | 5 | 5 |
| Stearinsäure | 2 | 2 | 2 |
| Naftolen ZD | 3 | 3 | 3 |
| Protector G 35 | 1 | 1 | 1 |
| Vulkanox 4010 NA | 2,5 | 2,5 | 2,5 |
| Vulkanox HS | 1,5 | 1,5 | 1,5 |
| Vulkacit MOZ | 1,43 | - | - |
| B | - | 1,66 | 1,66 |
| VZ b | - | - | 0,8 |
| Schwefel | 1,5 | 1,5 | 1,5 |
| $t_I$ (170°C), min. | 4,9 | 4,2 | 5,2 |
| $t_I$ (130°C), min. | 37,5 | 25,4 | 36,6 |

Wie sich am Beispiel 12 feststellen läßt, wird auch bei Anwesenheit von Si 69 in Ruß/ Kieselsäure-gefülltem NR eine Scorchverzögerung erreicht.

**Beispiel 13:** Wirkung von VZ b in einer unter Verwendung von D vernetzten, N 220-gefüllten NR-Mischung mit Schwefelspender

| | 26 | 27 | 28 |
|---|---|---|---|
| RSS 1, ML (1+4) = 70-80 | 100 | 100 | 100 |
| CORAX N 220 | 50 | 50 | 50 |
| ZnO RS | 5 | 5 | 5 |
| Stearinsäure | 2 | 2 | 2 |
| Naftolen ZD | 3 | 3 | 3 |
| Protector G 35 | 1 | 1 | 1 |
| Vulkanox 4010 NA | 2,5 | 2,5 | 2,5 |
| Vulkanox HS | 1,5 | 1,5 | 1,5 |
| Vulkacit MOZ | 1,43 | - | - |
| D | - | 1,76 | 1,76 |
| VZ b | - | - | 0,8 |
| Schwefel | 1,5 | - | - |
| Sulfasan R | - | 0,7 | 0,7 |
| $t_I$ (170 °C), min. | 4,5 | 3,2 | 4,8 |
| $t_I$ (130 °C), min. | 22,5 | 11,5 | 21,0 |

Auch bei Einsatz in NR-Mischungen mit Schwefelspender zusammen mit N,N'-substituierten Bis-(2,4-diamino-s-triazin-6-yl-oligosulfiden ergibt, wie Mischung 28 zeigt, der VZ b-Zusatz eine deutliche Scorchverlängerung auf das Niveau der Referenzmischung mit Sulfenamidbeschleunigung und Schwefel (Mischung 26).

**Beispiel 14:** Einfluß von VZ a in Kombination mit N,N'-substituierten Bis-(2,4-diamino-s-triazin-6-yl)-oligosulfiden in N 330-gefülltem BR

| | 29 | 30 | 31 | 32 |
|---|---|---|---|---|
| Buna CB 10 | 100 | 100 | 100 | 100 |
| CORAX N 330 | 60 | 60 | 60 | 60 |
| ZnO RS | 3 | 3 | 3 | 3 |
| Stearinsäure | 2 | 2 | 2 | 2 |
| Naftolen ZD | 15 | 15 | 15 | 15 |
| Protector G 35 | 1 | 1 | 1 | 1 |
| Vulkanox 4010 NA | 1,5 | 1,5 | 1,5 | 1,5 |
| D | 1,76 | 1,76 | - | - |
| V 225 | - | - | 1,5 | 1,5 |
| VZ a | - | 0,8 | - | 0,8 |
| Schwefel | 1,5 | 1,5 | 1,5 | 1,5 |
| $t_I$ (165°C), min. | 4,3 | 5,7 | 6,8 | 9,7 |
| Vulkanisatdaten bei 165°C | | | | |
| Spannungswert 300% | 7,1 | 9,8 | 6,0 | 8,8 |

Beispiel 14 zeigt die Inkubationszeitverlängerung von N,N'-substituierten Bis-(2,4-diamino-s-triazin-6-yl)-di- und tetrasulfidbeschleunigtem, N 330-gefülltem Polybutadien und gleichzeitig die beträchtliche 300%-Spannungswertsteigerung.

**Beispiel 15:** Wirkung von VZ a in Kombination mit N,N'-substituierten Bis-(2,4-diamino-s-triazin-6-yl)-oligosulfiden als Beschleunigern in NR/BR-Verschnitt

| | 37 | 38 | 39 | 40 | 41 |
|---|---|---|---|---|---|
| RSS 1, ML (1+4)=70-80 | 70 | 70 | 70 | 70 | 70 |
| Buna CB 10 | 30 | 30 | 30 | 30 | 30 |
| CORAX N 220 | 50 | 50 | 50 | 50 | 50 |
| ZnO aktiv | 5 | 5 | 5 | 5 | 5 |
| Stearinsäure | 2 | 2 | 2 | 2 | 2 |
| Naftolen ZD | 3 | 3 | 3 | 3 | 3 |
| Protektor G 35 | 1 | 1 | 1 | 1 | 1 |
| Vulkanox HS | 1,5 | 1,5 | 1,5 | 1,5 | 1,5 |
| Vulkanox 4010 NA | 2,5 | 2,5 | 2,5 | 2,5 | 2,5 |
| Vulkacit MOZ | 1,43 | - | - | - | - |
| D | - | 1,76 | 1,76 | - | - |
| V 225 | - | - | - | 1,5 | 1,5 |
| VZ a | - | - | 0,8 | - | 0,8 |
| Schwefel | 1,5 | 0,8 | 0,8 | 0,8 | 0,8 |
| $t_I$ (170°C), min. | 3,7 | 2,7 | 4,2 | 4,7 | 7,1 |
| $t_I$ (130°C), min. | 12,9 | 6,6 | 14,0 | 22,3 | 45,0 |

Beispiel 15 zeigt, daß auch im Verschnitt von NR mit Synthesekautschuk ein deutlicher Gewinn an Scorchsicherheit durch Zusatz von VZ-Substanzen erzielt werden kann.

Beispiel 16: Wirkung von VZ b in Kombination mit N,N'-substituierte Bis-(2,4-diamino-s-triazin-6-yl)-oligosulfiden als Beschleunigern in N 330-gefüllten NBR-Mischungen

| | 33 | 34 | 35 | 36 |
|---|---|---|---|---|
| Perbunan N 3307 NS | 100 | 100 | 100 | 100 |
| CORAX N 330 | 60 | 60 | 60 | 60 |
| ZnO aktiv | 5 | 5 | 5 | 5 |
| Stearinsäure | 1 | 1 | 1 | 1 |
| Mesamoll | 10 | 10 | 10 | 10 |
| Paraffin fest | 1 | 1 | 1 | 1 |
| Vulkanox HS | 1,5 | 1,5 | 1,5 | 1,5 |
| D | 1,76 | 1,76 | - | - |
| V 225 | - | - | 1,5 | 1,5 |
| VZ b | - | 0,8 | - | 0,8 |
| Schwefel | 1,2 | 1,2 | 1,2 | 1,2 |
| $D_{max} - D_{min}$, (170°C) Nm | 9,23 | 12,95 | 8,18 | 12,59 |
| $t_I$ (170°C), min | 3,5 | 4,9 | 4,8 | 8,4 |
| Vulkanisationsgeschwindigkeit t 90 - t 10%, min. | 8,2 | 2,7 | 9,4 | 3,1 |
| Vulkanisatdaten bei 170°C | | | | |
| Spannungswert | 14,0 | 17,1 | 11,6 | 15,5 |

Durch Zusatz von VZ b zu NBR-Mischungen in Gegenwart von N,N'-substituierten Bis-(2,4-diamino-s-triazin-6-yl)-oligosulfiden wird eine Verbesserung der Scorchsicherheit bei gleichzeitiger Steigerung der Vulkanisationsgeschwindigkeit ermöglicht. Ebenso erfolgt eine beträchtliche Steigerung des Spannungswertes 300%, trotz des bereits sehr hohen Ausgangsniveaus.

Verwendung von substituierten N-Trichlormethylthiodicarboximiden in Kombination mit N,N'-substituierten Bis-(2,4-diamino-s-triazin-6-yl)-Oligosulfiden in vulkanisierbaren Kautschukmischungen und derartige Kautschukmischungen

## Ansprüche

1. Die Verwendung von Verbindungen der allgemeinen Formel

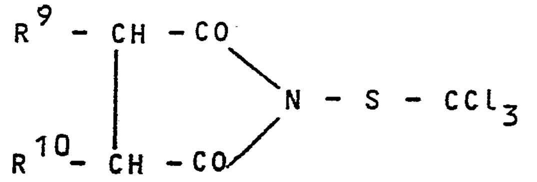 , (I)

in der bedeuten
$R^9$: H
$R^{10}$: H, $C_1$ -$C_{16}$ -Alkyl,Undecenyl, oder $R^9$ und
$R^{10}$ bilden zusammen mit den in 3-und 4-Stellung stehenden Kohlenstoffatomen des Dicarboximids einen Sechsring, gesättigt oder ein-oder dreifach ungesättigt, der ein-bis 2-fach durch Methyl substituiert sein kann, insbesondere Tetrahydrophthalimide der Formel

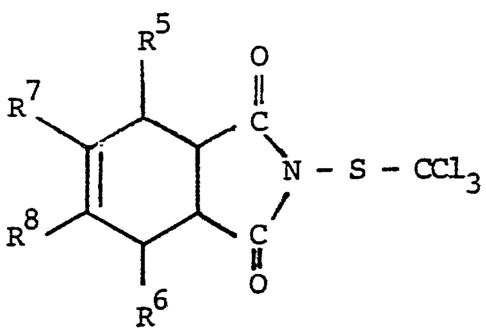

(Ia)

mit $R^7$, $R^8$ = H, Methyl,
$R^5$ und $R^6$ eine endo-$CH_2$ oder endo-O-Brücke,
in Kombination mit oligosulfidischen Verbindungen der Formel:

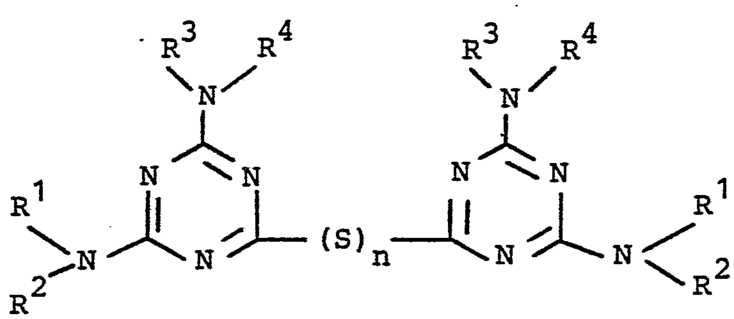

II

in der bedeuten:
$R^1$, $R^2$ = H, $R^2$ = Benzyl,
$R^2$, $R^3$, $R^4$ = $C_1$-$C_8$-Alkyl, Allyl, $C_3$-$C_8$ Cycloalkyl, letzteres unsubstituiert oder mit 1-3 Methylgruppen substituiert, 2-Hydroxiethyl, 3-Hydroxypropyl, 2-Hydroxypropyl oder
$R^3$ und $R^4$ (zusammen): $C_4$-$C_6$ Alkylen,-$(CH_2$-$CHX)_2Y$ mit X = H, $CH_3$, Y = O, S
n = 2 oder 4 oder ein Gemisch von Verbindungen gemäß Formel II, bei denen $S_n$ einer mittleren statistischen Kettenlänge mit n = 4 entspricht in vulkanisierbaren Kautschukmischungen als Vulkanisationsverzögerer mit Vernetzungsdichte erhöhendem Effekt.

2. Verwendung von N-Trichlormethylthiophthalimid gemäß Anspruch 1

3. Verwendung von 1,2,3,6-Tetrahydro-N-(trichlormethylthio)-phthalimid gemäß Anspruch 1

4. Verwendung von Verbindungen gemäß Anspruch 1 in Kombination mit konventionellen Beschleunigern auf Benzthiazol-oder Thiurambasis.

5. Verwendung von Verbindungen gemäß Anspruch 1 in Kombination mit Organosilanen der allgemeinen Formeln

III $[(R\ O)_3\text{-Si - }(CH_2)_n]_2\ \text{-}S_x$ oder $(RO)_3\text{-Si}(CH_2)_n\text{-SH}$ (IV)
mit n = 2;3, x = 2-6, R = $C_1$-$C_6$-Alkyl, Cyclohexyl
oder

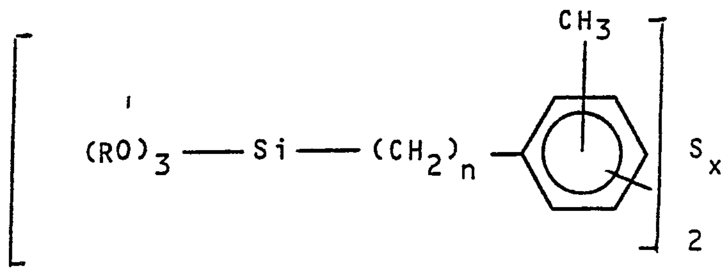

mit x = 2-6, bevorzugt 3,

in vulkanisierbaren Kautschukmischungen

6. Verwendung von Verbindungen der allgemeinen Formeln (I), (Ia) und (II) in Kombination mit zusätzlichen Schwefelspendern in vulkanisierbaren Kautschukmischungen.

7. Schwefelvulkanisierbare Kautschukmischungen, dadurch gekennzeichnet, daß sie 0,1 - 5 Teile substituierte N-Trichlormethylthiocarboximide gemäß den Formeln (I, Ia) enthalten, sowie 0,1 - 10 Teile N,N'-substituierter Bis-(2,4-diamino-s-triazin-6-yl)-oligosulfide gemäß Formel (II) sowie 0,1 - 10 Teile Schwefel, jeweils bezogen auf 100 Teile Kautschuk, wobei die drei Komponenten im molaren Verhältnis von 0,3-1.5 : 1·: 0.5-1.5, vorzugsweise 0,3-1.2 : 1 : 0.5-1.5 stehen.

8. Vulkanisierbare Kautschukmischungen, dadurch gekennzeichnet, daß sie 0,1 - 5 Teile substituierte N-Trichlormethylthiocarboximide gemäß den Formeln (I,Ia) und 0,1 bis 10 Teile N,N'-substituierter Bis-(2,4-diamino-s-triazin-6-yl)-oligosulfide gemäß Formel II mit n = 4 enthalten, jeweils bezogen auf 100 Teile Kautschuk, wobei die beiden Komponenten im molaren Verhältnis von 0,3 - 1,5 : 1 stehen, und kein freier Schwefel vorhanden ist.